# FASCICULE DE BREVET EUROPEEN

(11) **EP 1 223 147 B1**
(45) Date de publication et mention de la délivrance du brevet: **02.07.2014**
(21) Numéro de dépôt: 02290007.0
(22) Date de dépôt: 03.01.2002
(51) Int. Cl.: C01B 39/14

(54) **Procédé de préparation de zéolites A pour utilisation dans des formulations - base de resines polyurethane à deux composants**
Verfahren zur Herstellung von A Zeolithen zur Verwendung in Formulierungen auf Basis von Zweikomponenten-Polyurethanharzen
Process for the preparation of zeolites A for use in formulations containing two components polyurethane resins

(30) Priorité: 11.01.2001 FR 0100325
(43) Date de publication de la demande: 17.07.2002
(73) Titulaire: CECA S.A., 92250 La Garenne Colombes (FR)
(72) Inventeur: Nicolas, Serge, 64140 Lons (FR); Schmitt, Paul-Guillaume, 92600 Asnieres (FR)
(74) Mandataire: Lhoste, Catherine

(56) Documents cités:
- EP-A- 0 310 916
- EP-A- 0 346 604
- US-A- 4 461 631
- US-A- 4 857 584

## Description

### Domaine technique

La présente invention concerne un procédé de préparation de zéolites de type A dont les sites cations échangeables sont occupés par des ions sodium, potassium, calcium et/ou magnésium et hydronium particulièrement efficaces dans des formulations à base de résines polyuréthanes (PU) pour ce qui concerne la limitation des inclusions gazeuses et l'influence sur la durée de vie en pot.

### Technique antérieure

Les polyuréthanes (PU) non cellulaires à deux composants sont des résines largement utilisées notamment dans l'industrie des laques, adhésifs, films et revêtements. Pour ces applications, l'aspect de surface est une caractéristique très importante. Ces polyuréthanes sont préparés par addition de composés di- ou polyhydroxylés sur des di- ou polyisocyanates. Or, parallèlement à la formation des liaisons uréthane, les isocyanates réagissent avec l'eau présente dans le milieu réactionnel, donnant naissance à des isocyanates hydrolysés qui ne sont plus disponibles pour la polymérisation des PU et donnent eux-mêmes naissance à du dioxyde de carbone, qui lors de son dégagement va créer des bulles dans le PU et ainsi modifier fortement et de façon néfaste l'état de surface du PU final.

Les composés hydroxylés disponibles industriellement contenant, selon leur origine et leur qualité, jusqu'à 5 % en poids d'eau, il est nécessaire d'empêcher les réactions des isocyanates avec l'eau en adsorbant l'eau contenue dans les composés hydroxylés à l'aide d'un agent de dessication approprié.

FR 1.321.178 ou US 3.326.844 décrivent l'utilisation de zéolites 4A (zéolite de type A dont essentiellement tous les sites cationiques échangeables sont occupés par Na⁺), 5A (une partie des sites cationiques est occupée par Ca²⁺, le reste des sites étant au moins majoritairement occupé par Na⁺) et 13X (NaX) pour sécher des résines PU ; ces zéolites présentent l'avantage d'adsorber l'eau, mais l'inconvénient d'adsorber également de l'azote (qui peut être désorbé au cours du temps) provoquant ainsi des inclusions gazeuses et bulles dans la résine PU.

FR 2.049.873 ou DE 1.928.219 décrivent un procédé de préparation de masses de PU non cellulaires contenant comme agent de séchage une zéolite 3A dont 5 à 40 % des sites cationiques sont occupés par des ions sodium et 95 à 60 % par des ions potassium. Or il a été constaté que la zéolite 3A ne constituait pas réellement une charge inerte vis-à-vis du système polymérisable, et qu'après un stockage prolongé du composé hydroxylé avec la zéolite 3 A, il arrive que la durée de vie en pot du système composé hydroxylé/composé isocyanate se trouve considérablement diminuée au point d'être trop courte pour une application correcte du PU. US 6.051.647 décrit un procédé pour préparer une zéolite de type A dont les sites cationiques échangeables sont occupés par des cations K⁺, Na⁺ et H⁺ à partir d'une zéolite 3A (i-e dont les sites cationiques échangeables sont occupés soit par des ions potassium, soit par des ions sodium) qui est traitée avec une solution acide de telle sorte que le pH de cette zéolite soit entre 9,6 et 11. Une telle zéolite permet d'augmenter la durée de vie en pot de formulations PU par rapport à celle de formulations PU contenant une zéolite 3 A. EP 346.604 montre qu'une zéolite 3A, traitée avec une solution acide de telle sorte que le pH de cette zéolite soit entre 7,5 et 9,5, permet aussi d'augmenter la durée de vie en pot de résines PU mais US 6.051.647 et EP 346.604 sont muets sur l'aptitude à adsorber l'azote par ces zéolites.

EP 239.706 ou US 4.857.584 décrivent comme agent de séchage des PU une zéolite de type A dont les sites cationiques sont occupés par Ca²⁺, K⁺ et Na⁺ ou Mg²⁺, K⁺ et Na⁺ qui est une amélioration par rapport aux zéolites 4 A, 3 A et 13 X car elle permet non seulement d'éviter le dégagement de CO₂, mais aussi le dégagement d'azote et dont la durée de vie en pot des PU ainsi additivées, bien que sensiblement améliorée par rapport aux solutions techniques antérieures, est encore insuffisante pour les besoins des formulateurs de résines PU.

### Exposé de l'invention

Le procédé selon l'invention permet de préparer des zéolites de type A de rapport atomique Si/Al compris entre 0,95 et 1,1 dont l'ensemble des sites cationiques est occupé par des cations sodium, calcium et/ou magnésium, potassium et hydronium, comprenant, rapportés en équivalents :
*de 10 à 69 %, de préférence de 20 à 55 % d'ions sodium,
* de 28 à 55 %, de préférence de 28 à 40 %, d'ions potassium,
* de 2 à 45 %, de préférence de 10 à 45 %, et avantageusement de 15 à 45 % d'ions calcium et/ou magnésium,
* et de 1 à 20 %, de préférence de 2 à 10 % et avantageusement de 3 à 6 %, d'ions hydronium,
la somme des cations sodium, potassium, calcium et/ou magnésium et hydronium (rapportés en équivalent) étant égale à 100 %, qui présentent l'avantage d'avoir une capacité d'adsorption d'eau ≥ 23 %, qui n'adsorbent pas et donc ne peuvent pas désorber l'azote et qui, incorporées à des résines PU, permettent nettement plus d'augmenter la durée de vie en pot des formulations PU auxquelles elles sont incorporées que les agents de dessication zéolitiques tels que définis dans EP 239.706 tout en étant peu sensibles à l'âge du composé hydroxylé.

Le procédé, objet de la présente invention, consiste à
1/ mettre en contact les solutions ou suspensions aqueuses suivantes :
   a-i une suspension aqueuse de zéolite 3A (a-1), 4A (a-2) ou 5A (a-3),
   b-j une solution aqueuse de sel(s) de calcium (b-1), ou de sel(s) de potassium (b-3) ou des solutions de sel(s) de calcium et de potassium (b-2),
   c une solution d'acide
   selon l'une ou l'autre des méthodes suivantes :
   soit simultanément a-i, b-j et c,
   soit a-i et b-j puis c,
   soit a-i et c puis b-j,
   soit b-j et c puis a-i,
   avec dans tous les cas, i et j identiques (qui sera indiqué dans ce qui suit par a-i et b-i)
2/ puis filtrer et laver le solide obtenu,
3/ puis sécher et activer, de préférence sous balayage de gaz non dégradant, le solide issu de 2/.

Les proportions des différents cations présents dans la structure des zéolites sont mesurées de façon conventionnelle par fluorescence X, la précision des mesures étant de l'ordre de 1 %.

Par zéolite 4A, on entend ici une zéolite de type A dont essentiellement tous les sites cationiques échangeables sont occupés par Na⁺.

Par zéolite 3A, on entend ici une zéolite de type A dont 28 à 60 % (rapportés en équivalents) des sites cationiques échangeables sont occupés par des ions potassium, le reste des sites étant occupé par Na⁺.

Par zéolite 5A, on entend ici une zéolite de type A dont au moins 40 % des sites cationiques (rapportés en équivalents) sont occupé par Ca²⁺, le reste des sites étant occupé par Na⁺.

Au sens de l'invention, on entend par solutions (b-2) non seulement les solutions qui contiennent des sels de calcium et des sels de potassium, mais aussi l'association d'une solution de sel(s) de calcium (b-1) et d'une solution de sel(s) de potassium (b-3) avec lesquelles les réactifs (a-2) et ( c) sont mis en contact : soit mise en contact avec( b-1) puis avec (b-3) soit mise en contact avec (b-3) puis avec (b-1) ; autrement dit, dans le cadre du procédé selon l'invention (b-2) doit s'entendre aussi comme (b-1) puis (b-3) et (b-3) puis (b-1)

Au sens de l'invention, on entend par solution d'acide (c) des solutions aqueuses d'acide(s) faible(s) et/ou fort(s), de préférence à base d'acide(s) fort(s) tel qu'acide sulfurique, chlorhydrique et/ou nitrique, de normalité en général comprise entre 0,1 N et 36 N, et de préférence comprise entre 0,5 et 10 N.

Lorsque les solutions et la suspension sont mises en contact simultanément [(a-i) et (b-i) et ( c)], le mélange est en général effectué pendant une durée inférieure à 1 heure à une température en général comprise entre 15 et 80 °C.

Dans le cas où l'on mélange dans un premier temps la suspension de zéolite (a-i) et la solution acide (c), le mélange est en général effectué pendant quelques minutes, de préférence sous agitation, avant introduction de la solution aqueuse saline (b-i), le mélange réactionnel étant alors agité pendant une durée en général inférieure à 1 heure à une température en général comprise entre 15 et 80 °C.

Dans le cas où l'on mélange dans un premier temps la solution de sel(s) (b-i) et la solution acide (c), le mélange est en général effectué pendant quelques minutes, de préférence sous agitation, avant introduction de la suspension de zéolite (a-i), le mélange réactionnel étant alors agité pendant une durée en général inférieure à 1 heure à une température en général comprise entre 15 et 80 °C.

Dans les 3 cas décrits précédemment, on obtient un solide en suspension qui est filtré puis lavé à l'eau.

Dans le cas où l'on mélange dans un premier temps la suspension de zéolite (a-i) et la solution de sel(s) (b-i), le mélange est en général effectué pendant une durée en général inférieure à 1 heure, de préférence sous agitation, et à une température en général comprise entre 15 et 80 °C ; on obtient alors une suspension d'un solide que l'on filtre et lave à l'eau avant de l'introduire dans la solution acide (c) puis le produit est filtré et lavé avec un mélange de la solution acide et de l'eau de lavage.

Les concentrations et compositions des solutions de sels et d'acide seront ajustées de telle sorte que la zéolite finale réponde à la formule indiquée précédemment sans difficulté particulière.

Les inventeurs ont constaté, à partir des synthèses qu'ils ont effectuées, qu'au moins 50 % des ions hydronium de la solution d'acide ( c) sont échangés avec les autres cations présents sur la zéolite de départ.

Une fois filtré et lavé, le solide obtenu subit un traitement thermique comprenant d'abord une étape de séchage, en général entre 60 et 110 °C pendant une durée allant en général d'environ une demi-heure à environ 2 h, suivie d'une étape d'activation à une température en général comprise entre 300 et 600 °C, de préférence entre 350 et 500 °C, particulièrement importante pour la qualité finale de la zéolite issue du procédé. Les inventeurs ont constaté que, de manière surprenante, le pH des zéolites ainsi préparées augmente lorsque la température d'activation augmente mais aussi qu'une augmentation de la température augmente la dégradation de cristallinité de la zéolite. De manière préférentielle l'étape d'activation est mise en oeuvre sous balayage gazeux avec un gaz non dégradant (air, N₂...) ce qui permet d'évacuer rapidement l'eau présente dans la zéolite d'éviter sa dégradation hydrothermale tout en limitant les effets négatifs dus à une température d'activation trop élevée que l'on a signalés plus haut.

La quantité d'acide est optimisée de telle sorte qu'une activation comprise entre 300 et 600 °C, de préférence entre 350 et 500 °C, sous balayage gazeux permette d'obtenir un produit final de bonne qualité pour l'application de séchage des polyuréthanes (capacité d'adsorption d'eau ≥ 23 % (correspondant au rapport de l'augmentation de la masse de 1 g de zéolite activée après saturation en eau à l'issue d'un séjour de 24 h dans une enceinte fermée à 23 ± 2 °C dont l'humidité relative est égale à 50 % sur la masse de zéolite activée de référence (ici 1 g) *100) et pH compris entre 9,5 et 10,5 mesuré selon la norme NF EN ISO 787-9 :1995) On constate que plus on ajoute d'acide (solution c) par rapport à la zéolite de départ contenue dans la suspension (a-i) plus le pH de la zéolite finale est faible, plus la cristallinité de la zéolite finale se trouve également réduite.

### Exemple1

### Synthèse d'une zéolite Na-K-Ca-H à partir de poudre 4A en une seule étape [(a-2)+(b-2)+c]

La suspension (a-2) de zéolite 4A est constituée de 28 g de poudre 4A anhydre (100 % des sites cationiques échangeables sont occupés par des ions sodium) et de 56 ml d'eau de ville. La solution (b-2) de sels est composée de 82,6 g de KCI, de 30,5 g de CaCl₂ et de 326,5 ml d'eau de ville. La solution (c) d'acide est composée de 16 ml d'HCl 1N.

La suspension (a-2), 56,4 g de solution (b-2) et la solution (c) sont introduites simultanément dans un Becher et mises en contact sous agitation pendant 1 h, puis filtrées et lavées avec 420 ml d'eau de ville. Ensuite le gâteau ainsi obtenu est séché à 80 °C pendant 1 h puis activé dans des conditions non dégradantes (balayage gazeux d'air à environ 450 °C) Le produit ainsi obtenu a les propriétés suivantes :

| Cations de la zéolite préparée à l'exemple 1 (% des sites échangeables) | Capacité d'adsorption d'eau (%) | pH |
|---|---|---|
| Na⁺ : 35 / K⁺ : 29 / Ca²⁺ : 32/H⁺ : 4 | 24,0 | 10,0 |

A titre de comparaison, on met en contact la supension (a-2) précédente avec 56,4 g de solution (b-2) et on laisse le mélange sous agitation pendant 1 h avant de filtrer, laver et sécher le gâteau obtenu qui présente une fois activé les propriétés suivantes :

| Cations de la zéolite A préparée selon EP 239 706 (% des sites échangeables) | Capacité d'adsorption d'eau (%) | pH |
|---|---|---|
| Na⁺ : 36 / K⁺ : 33 / Ca²⁺ : 33 / H⁺ : 0 | 25,3 | 10,7 |

### Exemples 2 et 3

### Synthèse à partir de poudre 4A avec introduction de la solution acide dans la suspension de zéolite avant introduction de solution de CaCl₂ [((a-2)+c) puis (b-2)]

La suspension ((a-2)+c) de zéolite 4A est composée de 28 g de poudre 4A anhydre, 46 g d'eau de ville et respectivement 26 ml de H₂SO₄ 1 N (exemple 2) et 13 ml H₂SO₄ 1 N (exemple 3) Cette solution est mélangée pendant 15 min. Puis on introduit 56,4 g de la solution (b-2) de sels de l'exemple 1 et on mélange pendant 1 h. La récupération des gâteaux est identique à celle décrite à l'exemple 1. Après activation, on obtient des zéolites A dont les caractéristiques sont réunies dans le tableau ci-dessous :

| Cations de la zéolite A préparée à l'exemple 2 (% des sites échangeables) | Capacité d'adsorption d'eau (%) | pH |
|---|---|---|
| Na⁺ : 33 / K⁺ : 28 / Ca²⁺: 30 / H⁺ : 9 | 22,2 | 10,0 |

| Cations de la zéolite préparée à l'exemple 3 (% des sites échangeables) | Capacité d'adsorption d'eau (%) | pH |
|---|---|---|
| Na⁺ : 36 / K⁺ : 29 / Ca²⁺: 32 / H⁺ : 3 | 24,0 | 10,2 |

### Exemple 4

### Synthèse à partir de poudre 4A et introduction de l'acide dans la solution de sel CaCl₂ avant introduction dans la suspension de zéolite [((b-2)+c) puis (a-2)1

La suspension (a-2) de zéolite 4A est composée de 28 g de poudre 4A anhydre et 46 g d'eau de ville. La solution ((b-2)+c) est composée de 56,4 g de la solution (b-2) de l'exemple 1 et de 20 ml H₂SO₄ 1 N (c) La suspension (a-2) et la solution ((b-2)+c) sont agitées séparément pendant quelques minutes avant d'être mélangées et agitées ensemble pendant 1 heure. La récupération du gâteau est identique à celle décrite à l'exemple 1. Après activation, on obtient une zéolite A dont les caractéristiques sont réunies dans le tableau ci-dessous :

| Cations de la zéolite préparée à l'exemple 4 (% des sites échangeables) | Capacité d'adsorption d'eau (%) | pH |
|---|---|---|
| Na⁺ : 35 / K⁺ : 29 / Ca²⁺ : 32/ H⁺ : 4 | 24,1 | 10,0 |

### Exemple 5

### Synthèse à partir de poudre 4A avec introduction de l'acide lors du lavage [((a-2)+(b-2)) puis c]

La suspension (a-2) de zéolite 4A est composée de 28 g de poudre 4A anhydre et de 72 ml d'eau de ville. La suspension (a-2) et 56,4 g de la solution (b-2) de l'exemple 1 sont mélangés pendant 1 heure. Puis le gâteau est filtré et lavé avec une solution (c) comprenant 420 ml d'eau de ville et 20 ml d'HCl 1 N. Le gâteau est ensuite séché et activé comme décrit à l'exemple 1. La poudre ainsi obtenue a les propriétés suivantes :

| Cations de la zéolite préparée à l'exemple 5 (% des sites échangeables) | Capacité d'adsorption d'eau (%) | pH |
|---|---|---|
| Na⁺ : 35 / K⁺ : 29 / Ca²⁺ : 31 / H⁺ : 5 | 23,6 | 9,9 |

### Exemple 6

### Synthèse à partir de poudre 3A et introduction de l'acide dans la solution de sel CaCl₂ avant introduction dans la suspension de zéolite [((b-1)+c) puis (a-1)]

La suspension (a-1) de zéolite 3A est composée de 28 g de poudre de zéolite 3A (dont 43 % des sites cationiques échangeables sont occupés par des ions potassium et 57 % par des ions sodium) et de 82 g d'eau de ville. La solution ((b-1)+c) de sels est composée de 2,72 g de CaCl₂, 48 ml d'eau de ville et 16 ml d'HCl 1 N.

La suspension (a-1) et la solution ((b-1)+c) sont mises en contact pendant 15 min sous agitation. Puis le gâteau produit est filtré, lavé avec 420 ml d'eau de ville, séché et activé à 450 °C. La poudre ainsi obtenue a les propriétés suivantes :

| Cations de la zéolite préparée à l'exemple 6 (% des sites échangeables) | Capacité d'adsorption d'eau (%) | pH |
|---|---|---|
| Na⁺ : 36 / K⁺ : 32 / Ca²⁺ : 28 / H⁺ : 4 | 24,2 | 10,0 |

### Exemple 7

### Influence de l'activation

La poudre séchée issue de l'exemple 6 est soumise à différents traitements thermiques qui sont regroupés dans le tableau suivant :

| Température (°C) | Ventilation du four | pH | Capacité d'adsorption d'eau (%) |
|---|---|---|---|
| 400 | Non | 9,95 | 22,6 |
| 450 | Non | 10 | 21,5 |
| 550 | Non | 10,15 | 21,4 |
| 400 | Oui | 9,95 | 24,5 |
| 450 | Oui | 10 | 24,1 |
| 550 | Oui | 10,15 | 22,8 |

Les proportions des différents cations présents dans la structure des zéolites sont identiques (pas d'influence de la température d'activation et de la ventilation éventuelle du four)

### Exemple 8

### Synthèse à partir de poudre 3A avec introduction d'acide dans la solution de sel MgCl₂ avant introduction dans la suspension de zéolite [((b-1)+c) puis (a-1)]

Les conditions opératoires décrites à l'exemple 6 sont reprises à l'exception de la solution de CaCl₂ qui est remplacée par une solution aqueuse de MgCl₂ préparée à partir de 48 ml d'eau et 2,72 g de MgCl₂ ; on introduit ensuite respectivement 0, 16 et 20 ml de solution d'HCl 1 N. Les produits obtenus ont les propriétés suivantes :

| Quantité d'acide introduite (ml d'HCl 1N)// Cations de la zéolite | Capacité d'adsorption d'eau (%) | pH |
|---|---|---|
| 0 | 27,6 | 11,0 |
| Na⁺ : 41 % //K⁺ :34% //Mg²⁺ :25 % /H⁺ :0 % | | |
| 16 | 24,9 | 10,3 |
| Na⁺ : 34% //K⁺ :33% //Mg²⁺ :25 % /H⁺ :8 % | | |
| 20 | 24,1 | 10,1 |
| Na⁺ : 33% //K⁺ :32% //Mg²⁺ :25 % /H⁺ :10 % | | |

### Exemple 9

### Influence de la concentration en acide

Différentes poudres sont synthétisées selon le mode opératoire décrit à l'exemple 6 mais avec des quantités d'acide HCI 1 N introduites respectivement de 12,16, 20 et 26 ml. Les résultats sont réunis dans le tableau suivant :

| Quantité d'acide introduite (ml d'HCl 1N)// Cations de la zéolite | Capacité d'adsorption d'eau (%) | pH |
|---|---|---|
| 12 | | |
| Na⁺ : 37% //K⁺ :33% //Mg²⁺ :28 % /H⁺ :2 % | 24,6 | 10,15 |
| 16 | | |
| Na⁺ : 36% //K⁺ :32% //Mg²+:28 % /H⁺ :4 % | 24,2 | 10,0 |
| 20 | | |
| Na⁺ : 35% //K⁺ :32% //Mg²⁺ :28 % /H⁺ :5 % | 23,7 | 9,9 |
| 26 | | |
| Na⁺ : 34% //K⁺ :31% //Mg²⁺ :27 % /H⁺ :8 % | 21,4 | 9,85 |

## Revendications

1. Procédé de préparation de zéolites de type A de rapport atomique Si/Al compris entre 0,95 et 1,1 dont l'ensemble des sites cationiques est occupé par des cations sodium, calcium et/ou magnésium, potassium et hydronium, comprenant, rapportés en équivalents :
*de 10 à 69 %, de préférence de 20 à 55 % d'ions sodium,
* de 28 à 55 %, de préférence de 28 à 40 %, d'ions potassium,
* de 2 à 45 %, de préférence de 10 à 45 %, et avantageusement de 15 à 45 % d'ions calcium et/ou magnésium,
* et de 1 à 20 %, de préférence de 2 à 10 % et avantageusement de 3 à 6 %, d'ions hydronium,
la somme des cations sodium, potassium, calcium et/ou magnésium et hydronium (rapportés en équivalent) étant égale à 100 %, **caractérisé en ce qu'**il consiste à
1/ mettre en contact les solutions ou suspensions aqueuses suivantes :
a-i une suspension aqueuse de zéolite 3A (a-1), 4A (a-2) ou 5A (a-3),
b-j une solution aqueuse de sel(s) de calcium (b-1), ou de sel(s) de potassium (b-3) ou des solutions de sel(s) de calcium et de potassium (b-2),
c une solution d'acide
selon l'une ou l'autre des méthodes suivantes :
soit simultanément a-i, b-j et c,
soit a-i et b-j puis c,
soit a-i et c puis b-j,
soit b-j et c puis a-i,
avec dans tous les cas, i et j identiques ,
2/ puis filtrer et laver le solide obtenu,
3/ puis sécher et activer, de préférence sous balayage de gaz non dégradant, le solide issu de 2/.

2. Procédé selon la revendication 1 selon lequel les solutions et la suspension sont mises en contact (1/) simultanément [(a-i) et (b-i) et ( c)] et le mélange est agité, de préférence pendant une durée inférieure ou égale à 1 heure à une température comprise entre 15 et 80 °C puis le solide obtenu est filtré puis lavé à l'eau (2/) avant de subir le traitement thermique 3/.

3. Procédé selon la revendication 1 selon lequel on mélange (1/) d'abord la suspension de zéolite (a-i) et la solution acide ( c), de préférence sous agitation pendant quelques minutes, avant introduction de la solution aqueuse saline (b-i), le mélange réactionnel étant alors agité, de préférence pendant une durée inférieure ou égale à 1 heure à une température en général comprise entre 15 et 80 °C puis le solide obtenu est filtré puis lavé à l'eau (2/)avant de subir le traitement thermique 3/.

4. Procédé selon la revendication 1 selon lequel on mélange (1/) d'abord la solution de sel(s) (b-i) et la solution acide (c), de préférence sous agitation pendant quelques minutes, avant introduction de la suspension de zéolite (b-i), le mélange réactionnel étant alors agité, de préférence pendant une durée inférieure ou égale à 1 heure à une température comprise entre 15 et 80 °C puis le solide obtenu est filtré puis lavé à l'eau (2/) avant de subir le traitement thermique 3/.

5. Procédé selon la revendication 1 selon lequel on mélange (1/) d'abord la suspension de zéolite (a-i) et la solution de sel(s) (b-i), de préférence sous agitation pendant une durée inférieure ou égale à 1 heure à une température comprise entre 15 et 80 °C ; puis le solide en suspension obtenu est filtré et lavé à l'eau avant de l'introduire dans la solution acide (c) puis le solide obtenu est filtré et lavé (2/) avec un mélange de la solution acide et de l'eau de lavage.

6. Procédé selon l'une quelconque des revendications 1 à 5 selon lequel le traitement thermique de l'étape 3/ comprend d'abord une étape de séchage, de préférence entre 60 et 110 °C pendant une durée allant de préférence d'environ une demi-heure à environ 2 h, suivie d'une étape d'activation à une température de préférence comprise entre 300 et 600 °C, et avantageusement entre 350 et 500 °C.

7. Procédé selon la revendication 6 selon lequel l'activation est mise en oeuvre sous balayage gazeux avec un gaz non dégradant (air, N₂...)

## Patentansprüche

1. Verfahren zur Herstellung von Zeolithen vom Typ A mit einem Atomverhältnis Si/Al zwischen 0,95 und 1,1, bei denen die gesamten Kationenplätze von den Kationen Natrium, Calcium und/oder Magnesium, Kalium und Oxonium eingenommen werden, wobei sie ausgedrückt in Äquivalenten aufweisen:
* 10 bis 69 %, vorzugsweise 20 bis 55 % Natriumionen,
* 28 bis 55 %, vorzugsweise 28 bis 40 % Kaliumionen,
* 2 bis 45 %, vorzugsweise 10 bis 45 % und vorteilhaft 15 bis 45
% Calciumionen und/oder Magnesiumionen,
* und 1 bis 20 %, vorzugsweise 2 bis 10 % und vorteilhaft 3 bis 6 % Oxoniumionen,
wobei die Summe der Kationen Natrium, Kalium, Calcium und/oder Magnesium und Oxonium (angegeben in Äquivalenten) 100 % beträgt, **dadurch gekennzeichnet, dass** das Verfahren darin besteht:
1/ die folgenden wässrigen Lösungen oder Suspensionen:
a-i eine wässrige Lösung von Zeolith 3A (a-1), 4A (a-2) oder 5A (a-3),
b-j eine wässrige Lösung von Calciumsalz(en) (b-1) oder Kaliumsalz(en) (b-3) oder Lösungen von Calcium- und Kaliumsalz(en) (b-2),
c eine Säurelösung,
nach einer der folgenden Methoden in Kontakt zu bringen:
entweder gleichzeitig a-i, b-j und c,
oder a-i und b-j, dann c,
oder a-i und c, dann b-j,
oder b-j und c, dann a-i,
wobei in allen Fällen i und j identisch sind,
2/ anschließend den erhaltenen Feststoff zu filtrieren und zu waschen,
3/ und den Feststoff aus 2/ dann zu trocknen und vorzugsweise unter Spülen mit einem nicht zersetzenden Gas zu aktivieren.

2. Verfahren nach Anspruch 1, bei dem die Lösungen und die Suspension gleichzeitig [(a-i) und (b-j) und (c)] in Kontakt gebracht werden (1/) und das Gemisch vorzugsweise während einer Zeitspanne von höchstens 1 Stunde bei einer Temperatur zwischen 15 und 80 °C gerührt wird, worauf der erhaltene Feststoff filtriert und anschließend mit Wasser gewaschen wird (/2), bevor er der thermischen Behandlung 3/ unterzogen wird.

3. Verfahren nach Anspruch 1, bei dem zunächst die Suspension des Zeolithen (a-i) und die Säurelösung (c) vorzugsweise unter Rühren während einigen Minuten vermischt werden (1/), bevor die wässrige Salzlösung (b-i) hinzugefügt wird, wobei das Reaktionsgemisch dann vorzugsweise während einer Zeitspanne von höchstens 1 Stunde bei einer Temperatur im Allgemeinen zwischen 15 und 80 °C gerührt wird, worauf der erhaltene Feststoff filtriert und anschließend mit Wasser gewaschen wird (/2), bevor er der thermischen Behandlung 3/ unterzogen wird.

4. Verfahren nach Anspruch 1, bei dem zunächst die Lösung des Salzes (der Salze) (b-i) und die Säurelösung (c) vorzugsweise unter Rühren während einigen Minuten vermischt werden (1/), bevor die Zeolithsuspension (a-i) hinzugefügt wird, wobei das Reaktionsgemisch dann vorzugsweise während einer Zeitspanne von höchstens 1 Stunde bei einer Temperatur zwischen 15 und 80 °C gerührt wird, worauf der erhaltene Feststoff filtriert und anschließend mit Wasser gewaschen wird (/2), bevor er der thermischen Behandlung 3/ unterzogen wird.

5. Verfahren nach Anspruch 1, bei dem zunächst die Suspension des Zeolithen (a-i) und die Lösung des Salzes (der Salze) (b-i) bei einer Temperatur zwischen 15 und 80 °C vorzugsweise unter Rühren während einer Zeitspanne von höchstens 1 Stunde vermischt werden (1/); worauf der erhaltene Feststoff filtriert und mit Wasser gewaschen wird, bevor die Säurelösung (c) hinzugefügt wird, und der erhaltene Feststoff dann filtriert und mit einem Gemisch aus Säurelösung und Waschwasser gewaschen wird (/2).

6. Verfahren nach einem der Ansprüche 1 bis 5, bei dem die thermische Behandlung des Schrittes 3/ zunächst einen Trocknungsschritt vorzugsweise zwischen 60 und 110 °C während einer Zeitspanne von vorzugsweise etwa einer halben Stunde bis etwa 2 Stunden umfasst, worauf ein Aktivierungsschritt bei einer Temperatur von vorzugsweise zwischen 300 und 600 °C und vorteilhaft 350 und 500 °C folgt.

7. Verfahren nach Anspruch 6, bei dem die Aktivierung unter Spülen mit einem nicht zersetzenden Gas (Luft, N₂....) erfolgt.

## Claims

1. Method for the preparation of type-A zeolites with an Si/Al atomic ratio of between 0.95 and 1.1, all the cationic sites of which are occupied by sodium, calcium and/or magnesium cations, potassium cations and hydronium cations, comprising, with equivalent ratios:
*from 10 to 69%, preferably 20 to 55%, of sodium ions,
*from 28 to 55%, preferably 28 to 40%, of potassium ions,
*from 2 to 45%, preferably 10 to 45%, and advantageously 15 to 45%, of calcium and/or magnesium ions,
*and from 1 to 20%, preferably 2 to 10% and advantageously 3 to 6%, of hydronium ions,
wherein the sum of the sodium, potassium, calcium and/or magnesium and hydronium ions (with equivalent ratios) is equal to 100%, **characterised in that** it consists of:
1/ bringing the following solutions or suspensions into contact:
a-i an aqueous 3A (a-1), 4A (a-2) or 5A (a-3) zeolite suspension,
b-j an aqueous solution of calcium salt(s) (b-1) or potassium salt(s) (b-3) or solutions of calcium and potassium salt(s) (b-2),
c an acidic solution,
according to one or any other of the following methods:
either a-i, b-j and c simultaneously,
or a-i and b-j, then c,
or a-i and c, then b-j,
or b-j and c, then a-i,
where, in any case, i and j are identical,
2/ then filtering and cleaning the solid obtained,
3/ then drying and activating, preferably by scavenging with an inert gas, the solid arising from 2/.

2. Method according to claim 1, according to which the solutions and the suspension are brought into contact (1/) simultaneously [(a-i) and (b-i) and (c)] and the mixture is stirred, preferably for a duration that is less than or equal to 1 hour at a temperature between 15 and 80°C, after which the solid obtained is filtered, then rinsed with water (2/) before undergoing the heat treatment (3/).

3. Method according to claim 1, according to which first the zeolite suspension (a-i) and the acidic solution (c) are mixed (1/), preferably by stirring for several minutes, before an aqueous, saline solution (b-i) is introduced, wherein the reaction mixture is therefore preferably stirred for a duration of less than or equal to 1 hour at a general temperature of between 15 and 80°C, after which the solid obtained is filtered, then rinsed with water (2/) before undergoing the heat treatment (3/).

4. Method according to claim 1, according to which first the salt solution (b-i) and the acidic solution (c) are mixed (1/), preferably by stirring for several minutes, before the zeolite suspension (b-i) is introduced, wherein the reaction mixture is therefore preferably stirred for a duration of less than or equal to 1 hour at a temperature of between 15 and 80°C, after which the solid obtained is filtered, then rinsed with water (2/) before undergoing the heat treatment (3/).

5. Method according to claim 1, according to which first the zeolite suspension (a-i) and the salt solution (b-i) are mixed (1/), preferably by stirring for a duration of less than or equal to 1 hour at a temperature of between 15 and 80°C; then the obtained solid in suspension is filtered and rinsed with water before the acidic solution (c) is introduced, then the solid obtained is filtered and rinsed (2/) with a mixture of the acidic solution and the cleaning water.

6. Method according to one of claims 1 to 5, according to which the heat treatment from stage 3/ firstly comprises a drying stage, preferably between 60 and 110°C for a duration preferably lasting between approximately half an hour and approximately 2 hours, followed by an activation stage at a temperature that is preferably between 300 and 600°C, and advantageously between 350 and 500°C.

7. Method according to claim 6, according to which the activation is implemented with gaseous scavenging with an inert gas (air, N₂...).
